# EUROPEAN PATENT APPLICATION

(11) **EP 4 080 328 A1**
(43) Date of publication of application: **26.10.2022**
(21) Application number: 21169673.7
(22) Date of filing: 21.04.2021
(51) Int. Cl.: G06F 3/01, G01C 21/36, G06F 3/16, H04W 4/021, H04W 4/024

(54) **METHOD INVOLVING DIGITAL AVATAR**

(71) Applicant: Salient World AS, 0506 Oslo (NO)
(72) Inventor: Berg, Svend Håvar, 0551 Oslo (NO); Sah, Sumit, 0666 Oslo (NO); Dragøy, Petter, 1410 Kolbotn (NO)
(74) Representative: AWA Sweden AB

(57) **Abstract**

The present invention relates to a computer-implemented method, comprising: displaying on a screen (12) of a device (10) a navigation map (26) with a digital avatar (28), wherein the digital avatar displayed on the screen is capable of interacting with a user of the device with voice combined with at least one of gesture and facial expression; detecting a predetermined trigger event; and in response to detecting the predetermined trigger event, switching to displaying on the screen a mixed or augmented reality view, wherein the mixed or augmented reality view includes an image (46) captured by a camera (48) associated with the device, and wherein a digital avatar (28') is overlaid on the image captured by the camera.

## Description

### Technical field

The present invention relates to a computer-implemented method involving a digital avatar. The present invention also relates to a corresponding computer program product and mobile device.

### Background

Virtual assistants are driven by artificial intelligence programs that can understand natural language and complete tasks for a user based on spoken words alone. The tasks could include search for information, set alerts, schedule an event, order a taxi, etc.

Some virtual assistants display a digital avatar that may look like a real human replication. These virtual assistants could be embodied conversational agents capable of engaging in conversation with a user employing voice, gesture, facial expression, and so forth.

US2020302510 discloses a Virtual Stand or a Virtual Sales Associate or a Virtual Assistant or a Virtual Advisor or a Virtual Shopping Assistant or a Volumetric Personal Sales Assistant generated and provided to a user as an AR element, via a Virtual Selling Point Generator; such as, to enable e-commerce sales for multiple applications, or to interact with the user in an organic way and to provide the user with more information about brand products and content around the consumer.

In US2018328751, a user is wearing a headset and is located at a starting location, "Wild West Park". The user can view a digital AR representation of a cowboy to guide the user from the starting location to the destination location. Digital AR arrows, also visible via the, also provide navigational guidance for the user from "Wild West Park" to "Futuristic Park".

### Summary of the invention

Notwithstanding the solutions presented above, it is an object of the present invention to provide an improved method involving a virtual assistant.

According to a first aspect of the present invention, this and other objects are achieved by a computer-implemented method, comprising: displaying on a screen of a device a navigation map with a digital avatar, wherein the digital avatar displayed on the screen is capable of interacting with a user of the device with voice combined with at least one of gesture and facial expression; detecting a predetermined trigger event; and in response to detecting the predetermined trigger event, switching to displaying on the screen a mixed or augmented reality view, wherein the mixed or augmented reality view includes an image captured by a camera associated with the device, and wherein the digital avatar is overlaid on the image captured by the camera.

The image captured by the camera could be a live-view of the camera or a real-time video.

The present invention is based on the understanding that by displaying a digital avatar both on the (2D) navigation map and in the (3D) mixed/augmented reality view, an improved user experience is provided. For example, the user guided by the digital avatar on the navigation map can continue to be guided by the same digital avatar also in the mixed/augmented reality view. That is, the rich mode of interaction with a digital avatar does not change when switching from the navigation map to the mixed or augmented reality view. Furthermore, processing in the device may be facilitated, since the digital avatar does not have to be started at the same time as switching to the mixed/augmented reality view (the digital avatar was already loaded and started when displaying the navigation map).

The displayed digital avatar may be real-time positioned on the navigation map at a position corresponding to the current location of said device. That is, the digital avatar may be real-time positioned on the navigation map at substantially the same position as the user (of the device). This has the technical advantage that no further indicator of the user's position has to be displayed. The position/current location may be determined from a location functionality of the device, such as a GPS receiver.

The predetermined trigger event may be the user swiping up on the screen from the displayed digital avatar. This is an intuitive way for the user to cause the switch (transition) from the navigation map to the mixed/augmented reality view, since the user at the same time typically will raise the device from a more horizontal orientation (for the navigation map) to a more vertical orientation (for the mixed/augmented reality view).

Alternatively or complementary, the predetermined trigger event may be the user performing an upward shake of the device. This too is an intuitive way for the user to cause the switch (transition) from the navigation map to the mixed/augmented reality view. The upward shake may include at least one (quick and short) movement of the device in the positive direction of the y-axis, wherein the y-axis is within a plane defined by the major plane of the device and runs along the height of the device and in the middle of the device, and wherein the y-axis has a positive direction toward the top of the device. The upward shake may include a single movement of the device in the positive direction of the y-axis. The upward shake may include a single movement of the device in the positive direction of the y-axis, (immediately) followed by a single movement of the device in the negative direction of the y-axis, wherein the y-axis has a negative direction toward the bottom of the device.

Conversely, the present method may also comprise switching from the mixed or augmented reality view to the navigation map in response to detecting a (second) predetermined trigger event, such as the user swiping down on the screen from the overlaid digital avatar or the user performing a downward shake of the device.

Other trigger events could be used as well, such as the user tapping or double tapping on the digital avatar in the navigation map.

The mixed or augmented reality view may be a 3D augmented street view map. The 3D augmented street view map should be construed as an image (live-view/real-time video) captured by the camera of a street or a streetscape in a city or a rural area with at least one overlaid AR element. The at least one overlaid AR element could include street names, identification of points of interest, navigational arrows to guide the user, etc. Here, the digital avatar can for example conveniently guide the user to a destination (e.g. a particular address or a particular point of interest), both in the 2D navigation map and in the 3D augmented street view map. In the 3D augmented street view map, the digital avatar may (appear to) be walking in front of the user to guide the user to the destination.

The mixed or augmented reality view may be a 3D augmented in-venue map of a venue. The 3D augmented in-venue map should be construed as an image (live-view/real-time video) captured by the camera of at least some of the venue with at least one overlaid AR element. A venue could be a store, a shopping mall, a museum, an amusement park, a sports arena, a cruise ship, etc. The venue could be indoors and/or outdoors. The least one overlaid AR element could here include product information, section identifier ("women's clothing", "dairy products", "fruits & vegetables", "18^{th} century art", "souvenir shop", etc.), navigational arrows to guide the user inside the venue, etc.

The predetermined trigger event may here be the device connecting to an in-venue wireless communication system of said venue. The user may be presented with an option to connect to the in-venue wireless communication system, and when the user selects to do so, the 3D augmented in-venue map may automatically be launched. In this way, no further command other than connecting to the in-venue wireless communication system has to be performed by the user to switch to the 3D augmented in-venue map, which in turn may speed up operation and improve the user experience. In other words, this gives less clicks/commands and saves user time. The in-venue wireless communication system could for example be a Wi-Fi network (operated by the venue), but other wireless communication systems could be used as well.

Furthermore, augmented reality related data for the 3D augmented in-venue map may be received by the device exclusively from a local server of the venue via the in-venue wireless communication system. In this way, the user may save data on their cellular plan. Also, the venue can readily add/edit/remove the augmented reality related data for its 3D augmented in-venue map, so that it is always up to date. The augmented reality related data may for example be the aforementioned at least one overlaid AR element.

The digital avatar is a humanoid digital avatar. The displayed digital avatar may for example resemble a human face in the (2D) navigation map. In the mixed or augmented reality view, the (humanoid) digital avatar could represent a complete human including its head/face.

The digital avatar may be a graphical representation of an embodied conversational agent. The embodied conversational agent may be capable of engaging in conversation with the user employing the same verbal (voice/speech) and nonverbal means (such as gesture, facial expression, etc.) that humans do.

The device may be a mobile device, such as a smartphone or a tablet computer. The present digital avatar may be integrated or embedded within a computer program (app) stored on the mobile device.

According to a second aspect of the present invention, there is provided a computer program product comprising computer program code to perform, when executed on a computer device, the steps of: displaying on a screen of the computer device a navigation map with a digital avatar, wherein the digital avatar displayed on the screen is capable of interacting with a user of the computer device with voice combined with at least one of gesture and facial expression; detecting a predetermined trigger event; and in response to detecting the predetermined trigger event, switching to displaying on the screen a mixed or augmented reality view, wherein the mixed or augmented reality view includes an image captured by a camera associated with the computer device, and wherein a digital avatar is overlaid on the image captured by the camera, which digital avatar is capable of interacting with a user of the mobile device with voice combined with at least one of gesture and facial expression. This aspect of the invention may exhibit the same or similar features and technical effects the previous aspect, and vice versa. The computer program product may be a non-transitory computer program product. The computer program product may be the aforementioned computer program (app). The computer device may be the aforementioned mobile device.

According to a third aspect of the present invention, there is provided computer-readable storage medium comprising the computer program product according to the second aspect.

According to a fourth aspect of the present invention, there is provided an electrical signal embodied on a carrier wave and propagated on an electrical medium, the electrical signal comprising the computer program product according to the second aspect.

According to a fifth aspect of the present invention, there is provided a mobile device comprising a screen and a camera, wherein the mobile device is configured to: display on the screen a navigation map with a digital avatar, wherein the digital avatar displayed on the screen is capable of interacting with a user of the mobile device with voice combined with at least one of gesture and facial expression; detect a predetermined trigger event; and in response to detecting the predetermined trigger event, switch to displaying on the screen a mixed or augmented reality view, wherein the mixed or augmented reality view includes an image captured by the camera, and wherein the digital avatar is overlaid on the image captured by the camera. This aspect of the invention may exhibit the same or similar features and technical effects as any one of the previous aspects, and vice versa.

### Brief description of the drawings

These and other aspects of the present invention will now be described in more detail, with reference to the appended drawings showing currently preferred embodiments of the invention.
Fig. 1 is a front view of a device according to an aspect of the present invention.
Fig. 2 is a flowchart of a method according to one or more embodiments of the present invention.
Figs. 3a-b illustrate various trigger events.
Fig. 4 illustrates one or more embodiments with a 3D augmented in-venue map.
Fig. 5 illustrates an alternative menu.

### Detailed description of the invention

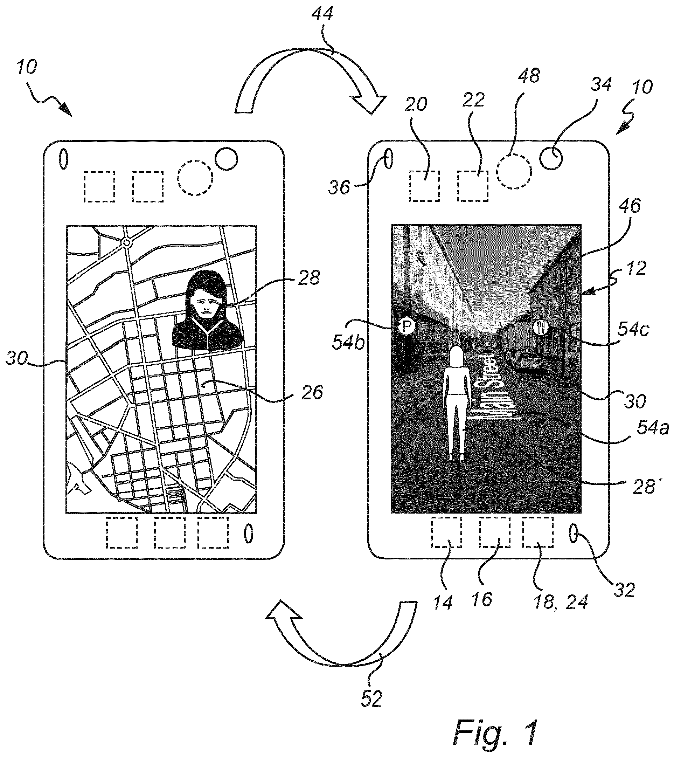

Fig. 1 illustrates a device 10 according to an aspect of the present invention. The device 10 is here a mobile device, namely a smartphone, like an iPhone or an Android phone.

The device 10 comprises an electronic display with a screen 12. The device 10 may also comprise a processor 14, a memory 16, and a storage 18. The device 10 may also comprise a GPS receiver 20 and wireless communication means 22. The wireless communication means 22 may include cellular (e.g. 4G or 5G), Wi-Fi, Bluetooth, etc.

The device 10 may be configured to perform various specific steps or actions detailed in the following by means of a computer program (product) 24, for example an app. The computer program 24 may be downloaded to the device 10 and stored on the aforementioned storage 18. The computer program 24 may run or be executed on the device 10 using the aforementioned processor 14 and memory 16.

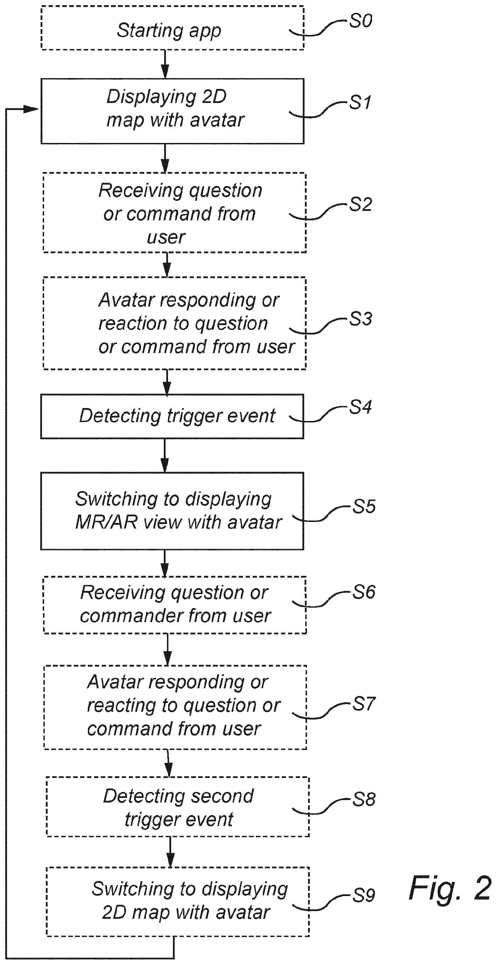

Turning to fig. 2, fig. 2 is a flowchart of a (computer-implemented) method according to one or more embodiments of the present invention.

At S0, the method may include starting the computer program 24 on the device 10. The computer program 24 may for example be started when a user (not shown) clicks on an icon of the computer program 24, which icon may be displayed on the screen 12.

At S1, the method includes displaying on the screen 12 a 2D (two-dimensional) navigation map 26 with a digital avatar 28, see fig. 1 left. The navigation map 26 may for example depict streets, roads, buildings, etc. as seen from above, in standard or satellite view. The navigation map 26 with the digital avatar 28 may for example be shown in a window 30 of the computer program 22, which window 30 is displayed on the screen 12. The herein illustrated window 30 covers the complete screen 12 ('full screen mode'), but could alternatively cover just a portion of the screen 12.

Preferably, the displayed digital avatar 28 may be real-time positioned on the navigation map 26 at a position corresponding to the current location of the device 10. This may be the launch screen/view of the computer program 24. For example, if the current location of the device 10 (and presumably its user) is say the NW corner of 2^{nd} Street and 5^{th} Avenue, the digital avatar 28 may be displayed/positioned at the NW corner of 2^{nd} Street and 5^{th} Avenue on the navigation map 26. The current location may be determined from the GPS receiver 20.

Furthermore, the digital avatar 28 may be a humanoid digital avatar. The displayed digital avatar 28 may for example resemble a human face in the navigation map 26, see fig. 1 left.

The digital avatar 28 displayed on the screen 12 is capable of interacting with the user of the device 10 with voice combined with at least one of gesture and facial expression. The digital avatar 28 may for example be a graphical representation of an embodied conversational agent.

Accordingly, following step S1, the method may further comprise receiving (at S2) a spoken input from the user, typically a question or a command, via at least one microphone 32 of the device 10. In other words, the user may interact with the digital avatar 28 displayed on the screen 12 with voice which is captured by the computer program 22 using the microphone(s) 32. The user may for example say a) "please provide directions to the National Museum", b) "what are the opening hours of the store to my left?", etc.

At S3, the method may further comprise the digital avatar 28 responding or reacting to the input from the user, with voice (via at least one loudspeaker 36 of the device 10) combined with gestures and/or facial expressions. In other words, in step S4 the displayed digital avatar 28 interacts back with the user. The gestures and/or facial expressions may include one or more of movement of the face of the displayed digital avatar 28, movement of facial muscles of the displayed digital avatar 28, and movement of lips of the displayed digital avatar 28. In response to the above input a), the digital avatar 28 may guide the user from the current location to the destination National Museum by voice (e.g. "Walk 200 m on Main Street and then turn right on King Street" etc.) and at the same time articulate the spoken words with corresponding lip movement. In response to the above input b), the digital avatar 28 may respond by voice "The opening hours of the store today are 7:00-23:00" and at the same time articulate the spoken words with corresponding lip movement.

Following S3, the method can loop back and wait for another input/question from the user.

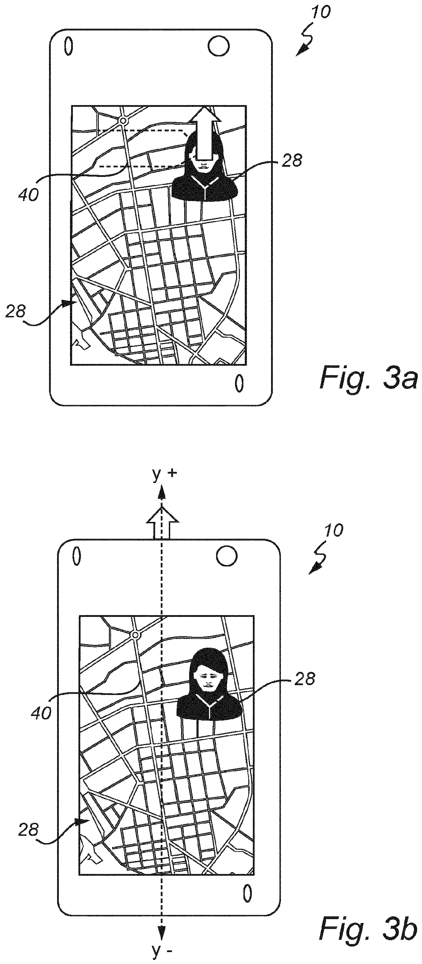

At S4, the method includes detecting a predetermined trigger event. The predetermined trigger event may for example be the user swiping up on the screen 12 from the displayed digital avatar 28 using their finger 40 (or a stylus pen), as shown in fig. 3a. Another predetermined trigger event could be the user performing an upward shake of the device 10, as shown in fig. 3b. The upward shake may include at least one (quick and short) movement of the device 10 in the positive direction of the y-axis 40. The upward shake may include a single movement of the device 10 in the positive direction of the y-axis 42, optionally (immediately) followed by a single movement of the device 10 in the negative direction of the y-axis 42.

When the predetermined trigger event is detected, the method switches (at S5) to displaying on the screen 12 a mixed reality (MR) or augmented reality (AR) view. This switching is illustrated by arrow 44 in fig. 1. The displayed mixed or augmented reality view includes an image 46 captured by a camera 48 associated with the device 10, wherein a digital avatar 28' is overlaid on the image 46 captured by the camera 48, see fig. 1 right.

The image 46 captured by the camera 48 could be a live-view of the camera 48 or a real-time video captured by the camera 48. The camera 48 may be a rear camera of the device 10. Furthermore, the image 46 with the overlaid digital avatar 28 may for example be shown in the window 30 of the computer program 22. Furthermore, the overlaid digital avatar 28' will typically be the same as the digital avatar 28 on the navigation map 26, although it could here represent a complete human including the face, rather than just the face. In other words, the digital avatar 28' may be an extended graphical representation of the aforementioned embodied conversational agent. Alternatively, the overlaid digital avatar 28' could be a different digital avatar than the digital avatar 28 on the navigation map 26.

By displaying a digital avatar 28, 28' both on the (2D) navigation map 26 and overlaid on the image 46 in the (3D) mixed/augmented reality view, an improved user experience is provided. Namely, the rich mode of interaction with a digital avatar does not change when switching from the navigation map to the mixed or augmented reality view. Furthermore, processing in the device 10 may be facilitated, since the digital avatar 28, 28' is constantly loaded and ready to serve the user in any mode switching between the navigation map 26 and the mixed/augmented reality view.

Following step S5, the method may further comprise receiving (at S6) a spoken input from the user, typically a question or a command, via the microphone(s) 32. In other words, the user may (continue to) interact with the digital avatar 28' now overlaid on the image 46. Similar to S2, the user may here for example say a) "please provide directions to the Central Station", b) "what is the building to my right?", etc.

At S7, the method may further comprise the digital avatar 28' overlaid on the image 46 responding or reacting to the input from the user, with voice (via the loudspeaker(s) 36) combined with gestures and/or facial expressions. In other words, in step S6 the overlaid digital avatar 28' interacts back with the user. The gestures and/or facial expressions may include one or more of movement of the face of the overlaid digital avatar 28', movement of facial muscles of the overlaid digital avatar 28', and movement of lips of the overlaid digital avatar 28'. In response to the above input a), the digital avatar 28' may guide the user from a current location to the destination Central Station by voice (e.g. "Walk 40 m on Main Street and then turn left on King Street" etc.) and at the same time articulate the spoken words with corresponding lip movement. Alternatively or complementary, the overlaid digital avatar 28' may here guide the user from the current location to the destination by walking in front of the user towards the destination. When walking in front of the user to show the way to the destination, the digital avatar 28' could be displayed with their back towards the user, to mimic natural behaviour. In response to the above input b), the digital avatar 28' could respond by voice "The building to your right is the National Post Office" and at the same time articulate the spoken words with corresponding lip movement. Here the digital avatar 28' could face the user (i.e. the face of the digital avatar 28' including eyes, lips, etc. is displayed on the screen 12), so that the digital avatar 28' can respond in a natural and polite way. Hence, the method may determine which way the overlaid digital avatar 28' should be facing depending on the nature of the input from the user, and display the digital avatar 28' accordingly.

Following S7, the method can loop back and wait for another input from the user.

At S8, the method may include detecting a second predetermined trigger event, such as the user swiping down on the screen 12 from the overlaid digital avatar 28' or the user performing a downward shake of the device 10.

In response to detecting the second predetermined trigger event, the method may at S9 switch (back) to the navigation map 26 with the digital avatar 28. This switching is illustrated by arrow 52 in fig. 1.

Depending on the circumstances, the method could skip steps S2-S3 and jump directly from S1 to S4 if no spoken input/question from the user is received before the trigger event is detected. Likewise, the method could skip steps S6-S7 and jump directly from S5 to S8 if no spoken input/question from the user is received before the second trigger event is detected. Furthermore, in S7 the digital avatar 28' could continue to guide the user to a destination based on a request received in S2 without received a new request in S6. In other words, the digital avatar could continue to guide the user even in the method switches from the navigation map 26 to the mixed/augmented reality view, and vice versa.

In some embodiments, the user input to the digital avatar 28, 28' could also include face gestures and/or body gestures of the user, as captured e.g. by a front camera 34 of the device 10. Accordingly, the digital avatar 28, 28' could (in real time) read or interpret sentiments and/or emotions of the user based on the face gestures and/or body gestures of the user as captured by the front camera 34. Based on the read or interpreted sentiments and/or emotions of the user, the digital avatar 28, 28' may response with appropriate facial gestures and speech.

As shown in fig. 1 right, the mixed or augmented reality view may be a 3D augmented street view map. The aforementioned image 46 captured by the camera 48 may for example show streets, roads, buildings, etc. as seen by the camera 48, with at least one overlaid AR element 54a-c other than digital avatar 28'. The at least one overlaid AR element could include a street name 54a, identification of points of interest 54b-c, navigational arrows to guide the user, etc. As mentioned above, the digital avatar 28' may here guide the user from a current location to a destination by voice and/or by walking in front of the user towards the destination. Otherwise, the overlaid digital avatar 28' may be real-time positioned on 3D augmented street view map at a position corresponding to the current location of the device 10.

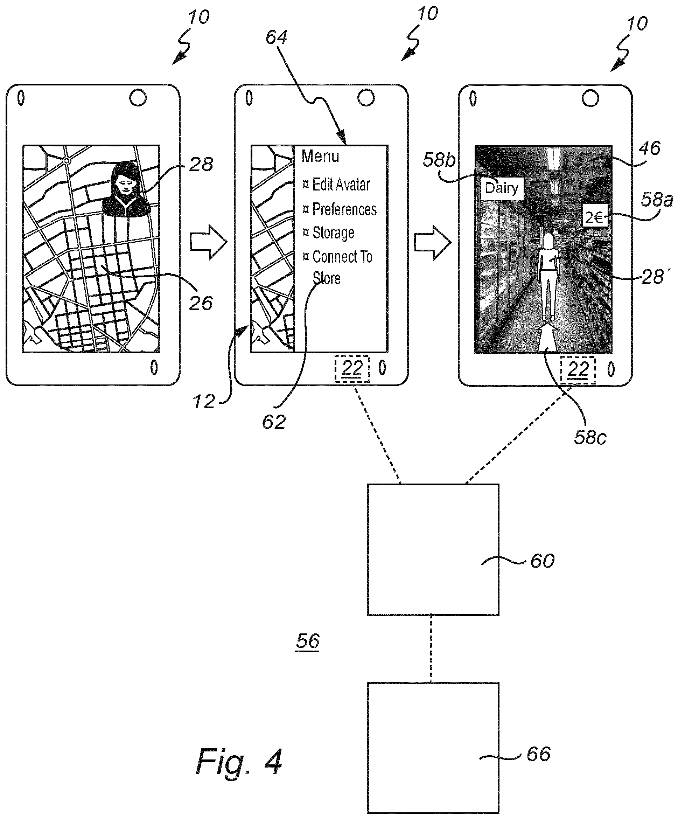

In other embodiments, the mixed or augmented reality view may be a 3D augmented in-venue map of a venue 56, see fig. 4. The aforementioned image 46 captured by the camera 48 may here for example show the inside of a store or mall or cruise ship, a museum hall, walkways, rides & attractions, buildings, etc. of an amusement park, and so on, with at least one overlaid AR element 58a-c other than digital avatar 28'. The least one overlaid AR element could here include product information 58a, a section identifier 58b, navigational arrows 58c to guide the user inside the venue 56, etc.

Similar to the above, the digital avatar 28' may here guide the user the fastest way from a current location to a destination (e.g. the fruits & vegetables section) inside the venue by voice and/or by walking in front of the user towards the destination.

Furthermore, the digital avatar 28, 28' could be a virtual shopping assistant who can organize, store and output information based on the user's location and preferences. The digital avatar 28, 28' will for example be able to answer queries, search for brands, prices, augment stores, and product information. Furthermore, the digital avatar 28, 28' may find and locate the fastest way to a retail store (e.g. inside a shopping mall 56), monitor walking time and distance, transportation schedule, and other real-time information in a human-like conversation. If the user looking for a particular item such as an expensive watch, phone or engagement rings, the digital avatar 28, 28' could recommend the nearest authorized or high-end retail store (e.g. in the mall 56).

The predetermined trigger event may here be the device 10 connecting to an in-venue wireless communication system 60 of the venue 56, such as a Wi-Fi network. When the device 10 is in range of the in-venue wireless communication system 60, the user may be presented with an option 62 to connect to the in-venue wireless communication system 60, and when the user selects to do so by tapping on the 'Connect To Store' option 62, the 3D augmented in-venue map may automatically be launched.

The option 62 to connect to the in-venue wireless communication system 60, as well as other clickable menu items, could be presented on a hovering right-side menu 64 of the computer program 24. The right-side menu 64 could for example be brought out by the user swiping left on the screen 12 (preferably from its right edge) or the user performing a left shake of the device 10. The menu 64 may be hidden/collapsed by the user swiping right on the screen 12 or the user performing a right shake of the device 10, for example.

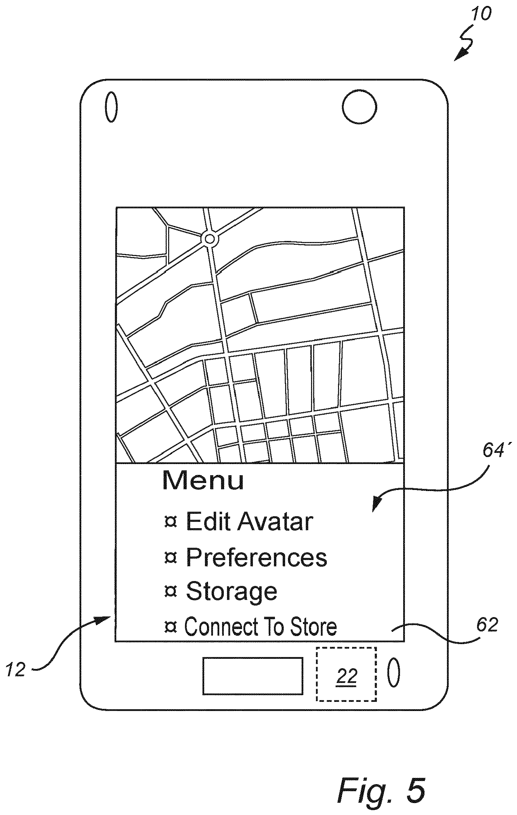

Alternatively the option 62 to connect to the in-venue wireless communication system 60, as well as the other clickable menu items, could be presented on a hovering bottom up-side menu 64' of the computer program 24, see fig. 5. The menu 64' could for example be brought out by the user swiping up on the screen 12 (preferably from its bottom edge) or the user performing a double up shake of the device 10. The menu 64' may be hidden/collapsed by the user swiping down on the screen 12 or the user performing double down shake of the device 10, for example.

When the device 10 is connected to the in-venue wireless communication system 60, (all) augmented reality related data for the 3D augmented in-venue map may be received by the device 10 exclusively from a local server 66 of the venue 56 via the in-venue wireless communication system 60. The augmented reality related data may for example be the aforementioned overlaid AR elements 58a-c.

The person skilled in the art realizes that the present invention by no means is limited to the embodiments described above. On the contrary, many modifications and variations are possible within the scope of the appended claims.

## Claims

1. A computer-implemented method, comprising:
displaying on a screen (12) of a device (10) a navigation map (26) with a digital avatar (28), wherein the digital avatar displayed on the screen is capable of interacting with a user of the device with voice combined with at least one of gesture and facial expression;
detecting a predetermined trigger event; and
in response to detecting the predetermined trigger event, switching to displaying on the screen a mixed or augmented reality view, wherein the mixed or augmented reality view includes an image (46) captured by a camera (48) associated with the device, and wherein the digital avatar (28') is overlaid on the image captured by the camera.

2. A computer-implemented method according to claim 1, wherein the displayed digital avatar is real-time positioned on the navigation map at a position corresponding to the current location of said device.

3. A computer-implemented method according to claim 1 or 2, wherein the predetermined trigger event is the user swiping up on the screen from the displayed digital avatar.

4. A computer-implemented method according to any one of the preceding claims, wherein the predetermined trigger event is the user performing an upward shake of the device.

5. A computer-implemented method according to any one of the preceding claims, wherein the mixed or augmented reality view is a 3D augmented street view map.

6. A computer-implemented method according to any one of the preceding claims, wherein the mixed or augmented reality view is a 3D augmented in-venue map of a venue (56).

7. A computer-implemented method according to claim 6, wherein the predetermined trigger event is the device connecting to an in-venue wireless communication system (60) of said venue.

8. A computer-implemented method according to claim 6 or 7, wherein augmented reality related data for the 3D augmented in-venue map is received by the device exclusively from a local server (66) of said venue via an in-venue wireless communication system of said venue.

9. A computer-implemented method according to any one of the preceding claims, wherein the digital avatar is a humanoid digital avatar.

10. A computer-implemented method according to any one of the preceding claims, wherein the displayed and overlaid digital avatar is a graphical representation of an embodied conversational agent.

11. A computer-implemented method according to any one of the preceding claims, wherein said device is a mobile device, such as a smartphone or a tablet computer.

12. A computer program product (24) comprising computer program code to perform, when executed on a computer device (10), the steps of:
displaying on a screen (12) of the computer device a navigation map (26) with a digital avatar (28), wherein the digital avatar displayed on the screen is capable of interacting with a user of the computer device with voice combined with at least one of gesture and facial expression;
detecting a predetermined trigger event; and
in response to detecting the predetermined trigger event, switching to displaying on the screen a mixed or augmented reality view, wherein the mixed or augmented reality view includes an image (46) captured by a camera (48) associated with the computer device, and wherein a digital avatar (28') is overlaid on the image captured by the camera, which digital avatar (28') is capable of interacting with a user of the mobile device with voice combined with at least one of gesture and facial expression.

13. A computer-readable storage medium comprising the computer program product according to claim 12.

14. An electrical signal embodied on a carrier wave and propagated on an electrical medium, the electrical signal comprising the computer program product according to claim 12.

15. A mobile device (10) comprising a screen (12) and a camera (48), wherein the mobile device is configured to:
display on the screen a navigation map (26) with a digital avatar (28), wherein the digital avatar displayed on the screen is capable of interacting with a user of the mobile device with voice combined with at least one of gesture and facial expression;
detect a predetermined trigger event; and
in response to detecting the predetermined trigger event, switch to displaying on the screen a mixed or augmented reality view, wherein the mixed or augmented reality view includes an image (46) captured by the camera, and wherein the digital avatar (28') is overlaid on the image captured by the camera.
